# EUROPÄISCHE PATENTSCHRIFT

(11) **EP 3 330 693 B1**
(45) Veröffentlichungstag und Bekanntmachung des Hinweises auf die Patenterteilung: **27.11.2019**
(21) Anmeldenummer: 17205473.6
(22) Anmeldetag: 05.12.2017
(51) Int. Cl.: G01M 17/007

(54) **FAHRBAHNBELAGELEMENT UND FAHRBAHNBELAG FÜR EINEN ROLLENPRÜFSTAND**
RUNNING LANE ELEMENT AND LANE ELEMENT FOR A ROLLER TEST BENCH
ÉLÉMENT DE VOILE EN COURS DE ROULEMENT POUR UN BANC D'ESSAI À ROULEAU

(30) Priorität: 05.12.2016 DE 102016224168
(43) Veröffentlichungstag der Anmeldung: 06.06.2018
(73) Patentinhaber: AIP GmbH & Co. KG, 87490 Haldenwang (DE)
(72) Erfinder: Knestel, Anton, D-87496 Hopferbach (DE); Hartmann, Christian, D-87452 Altusried (DE); Becherer, Thomas, D-87463 Dietmannsried (DE)
(74) Vertreter: MERH-IP Matias Erny Reichl Hoffmann Patentanwälte PartG mbB

(56) Entgegenhaltungen:
- DE-A1- 10 031 091
- DE-A1-102004 001 439
- US-A- 4 944 714

## Beschreibung

Die vorliegende Erfindung betrifft ein Fahrbahnbelagelement und einen Fahrbahnbelag für einen Rollenprüfstand für Kraftfahrzeuge. Die Fahrbahnbelagelemente sind an Rollen des Rollenprüfstands montierbar. Die Rollenprüfstände werden insbesondere zur Simulation von Straßenfahrten verwendet, wobei, abhängig von der Beschaffenheit der Fahrbahnbelagelemente, verschiedene Oberflächen simuliert werden können.

Die Geräuschentwicklung eines auf einem Fahrbahnbelag abrollenden Reifens von Kraftfahrzeugen wird mittels sogenannter Akustikmessungen getestet. Dazu werden Fahrbahnbelagelemente (z. B. Belagschalen) auf Prüfstandsrollen von Rollenprüfständen montiert auf denen das Fahrzeug während der Akustikmessung aufsteht.

Die Fahrbahnbelagelemente geben Oberflächen von realen Fahrbahnbelägen möglichst genau wieder. So kann die wiedergegebene Oberflächenkontur des realen Fahrbahnbelags jeder Art von einem gängigen Asphaltfahrbahnbelag, einem Kies- bzw. Schotterfahrbelag, einem Kopfsteinpflasterbelag und dergleichen entsprechen.

Fahrzeugentwickler optimieren Fahrzeuge derart, dass Schall- und Körperschallwellen vom Fahrgastraum bestmöglich isoliert werden, sodass die Unebenheiten der Fahrbahn möglichst geringe akustische Auswirkungen auf den Fahrgastraum haben.

In der DE 10 2012 205 985 A1 werden Fahrbahnbelagelemente für einen Rollenprüfstand beschrieben, wobei ein Verfahren zur Herstellung von Fahrbahnelementen beschrieben ist. Die Oberflächenkontur eines Fahrbahnbelags wird innerhalb eines streifenförmigen Abschnitts erfasst. Zudem wird ein digitales Abbild des erfassten Abschnitts erzeugt und ein Fahrbahnbelagelement gemäß dem digitalen Abbild mittels einer dreidimensionalen Herstellungstechnik hergestellt. Dadurch wird die Oberflächenkontur eines Fahrbahnbelags nachgebildet.

In der DE 101 41 973 C1 ist ein Oberflächenbelag beschrieben mit einem Kleber in den Mineralteilchen eingebracht werden zur Herstellung einer fahrbahnähnlichen Struktur auf einer Lauftrommel eines Prüfstands.

In der DE 10 2013 205 248 A1 werden Belagschalen beschrieben, die bei der Montage auf eine Rolle vorgespannt werden.

In der DE 100 31 091 A1 ist ein Rollenprüfstand für Kraftfahrzeuge mit zwei Rollen zum Abrollen der Räder, wobei mindestens eine der beiden Rollen drehangetrieben und blockierbar bzw. bremsbar ist.

In der DE 10 2004 001 439 A1 wird ein Prüfstand für Kraftfahrzeuge mit einer eine Lauffläche aufweisenden Abrolleinrichtung zum Abrollen der Räder gezeigt.

In der US 4 944 714 A ist gezeigt wie ein Flachriemenantrieb um Antriebs- und Umlenkrollen herumgeführt geführt wird.

Bei den im Stand der Technik beschriebenen Vorrichtungen werden Belagschalen beschrieben, welche eine Oberfläche aufweisen, die eine ähnliche oder gleiche Oberfläche wie eine reale Fahrbahn aufweisen, damit die gleichen Abrollgeräusche wie auf der Straße simuliert werden. Es gibt jedoch auch Untersuchungen an Fahrzeugen bei denen die Reifengeräusche oder Abrollgeräusche der Reifen unerwünscht sind, beispielsweise bei der akustischen Untersuchung des Antriebsstrangs, des Motors oder weiterer Elemente des Fahrzeugs.

Ausgehend von dem vorstehend genannten Stand der Technik ist es eine Aufgabe der vorliegenden Erfindung, einen Fahrbahnbelag bzw. ein Fahrbahnbelagelement für einen Rollenprüfstand bereitzustellen welcher verbesserte akustische Eigenschaften aufweist. Insbesondere ist es eine Aufgabe einen Fahrbahnbelag bzw. ein Fahrbahnbelagelement für einen Rollenprüfstand bereitzustellen mit dem Reifengeräusche bei Untersuchungen am Rollenprüfstand möglichst gering gehalten werden können. Eine Aufgabe kann somit auch darin gesehen werden, einen Fahrbahnbelag bzw. ein Fahrbahnbelagelement für einen Rollenprüfstand bereitzustellen mit welchem die Abrollgeräusche des Fahrzeugs am Prüfstand minimiert werden können. Zudem ist es eine Aufgabe eine entsprechende Prüfstandsrolle und einen entsprechenden Fahrzeugprüfstand vorzusehen.

Zur Lösung der vorstehend genannten Aufgabe wird ein Fahrbahnbelagelement bzw. ein Fahrbahnbelag gemäß des unabhängigen Anspruchs 1 vorgeschlagen. Abhängige Ansprüche betreffen vorteilhafte Weiterbildungen der vorliegenden Erfindung.

Um die Geräuschentwicklung beim Abrollen mit einem Reifen zu verringern, wird versucht, die Oberfläche des Fahrbahnbelagelements möglichst glatt auszugestalten. Beim Abrollen auf sehr glatten Oberflächen ergibt sich jedoch das Problem, dass der Geräuschpegel ansteigt, weil der Reifen auf der glatten Oberfläche ein sogenanntes "Schmatzen" verursacht. Dieses Schmatzen resultiert aus dem Vakuum, das sich beim Lösen der Reifenoberfläche von der glatten Oberfläche bildet. Dieses örtliche Vakuum führt wiederum zu dem akustisch wahrnehmbaren "Schmatzen". Um dieses Schmatzen zu reduzieren bzw. zu vermeiden, ist es möglich, die Oberfläche der Belagschale aufzurauen. Dies jedoch führt wiederum zur Erhöhung des Geräuschpegels beim Abrollen. Als Lösung dieses Konflikts wird vorgeschlagen, eine glatte Oberfläche für die Belagschale bzw. den Fahrbahnbelag bereitzustellen und diese Oberfläche zusätzlich luftdurchlässig aufzubauen. Eine solche Luftdurchlässigkeit ermöglicht es, eine gewisse Luftströmung im Kontaktbereich beim Abrollen des Reifens zu gewährleisten, sodass trotz glatter Oberfläche der genannte Vakuumeffekt reduziert bzw. vermieden werden kann.

Die Belagsschicht kann derart luftdurchlässig sein, dass eine Luftströmung durch die Außenfläche der Belagsschicht möglich ist. Um den Vakuumeffekt zu vermeiden, erlaubt es eine luftdurchlässige Außenfläche, eine Bewegung der Luft derart vorzusehen, dass beim Abrollvorgang das Schmatzen reduziert bzw. vermieden werden kann.

Die Belagsschicht kann von Gas durchströmbar aufgebaut sein. Eine weitere Reduktion des Lärmpegels beim Abrollen wird ermöglicht durch eine Belagsschicht des Fahrbahnbelags, welche vollständig von Gas durchströmbar ist, sodass eine Luftbewegung von der Außenfläche der Belagsschicht zur Innenfläche der Belagsschicht möglich ist. Es kann somit die gesamte Belagsschicht im Abrollbereich luftdurchlässig sein. Durch eine solche Ausgestaltung kann der Vakuumeffekt stark reduziert werden. Zudem ermöglicht es eine solche Ausgestaltung von der Innenseite der Belagsschicht, eine Luftzufuhr/Abfuhr vorzusehen, sodass durch das Einblasen oder Absaugen von Luft auf der Innenseite der Belagsschicht die Luftströmung an der Außenfläche der Belagsschicht eingestellt werden kann, sodass eine starke Reduktion der Abrollgeräusche des Fahrzeugreifens erreicht werden kann.

Die Belagsschicht kann derart luftdurchlässig aufgebaut sein, dass eine Durchlässigkeit von Luft von einer ersten Seite der Belagsschicht zu einer zweiten Seite der Belagsschicht möglich ist. Dabei kann vorteilhaft ein Druckabfall von der ersten zur zweiten Seite größer 30 Pa (0,3 mBar) und kleiner 850 Pa (8,5 mBar) vorliegen.

Die Belagsschicht kann eine offenporige Struktur aufweisen, welche eine Luftzirkulation ermöglicht.

Die Belagsschicht kann aus einem Filtermaterial bestehen. Filtermaterialien zur Filterung von Gasen bzw. Flüssigkeiten sind durchlässig ausgestaltet, sodass ein Stoffaustausch über dieses Filtermaterial hinweg möglich ist. Eine Belagschale welche dieses Filtermaterial umfasst bzw. aus diesem Filtermaterial besteht ermöglicht somit auf einfache Weise die Umsetzung eines luftdurchlässigen Fahrbahnbelags für das Fahrbahnbelagselement des Rollenprüfstands.

Die Belagsschicht kann eine Metallstruktur umfassen oder vollständig aus einer Metallstruktur bestehen. Die luftdurchlässige Belagsschicht, welche aus einer Metallstruktur aufgebaut ist oder eine solche Metallstruktur umfasst, kann auf vorteilhafte Weise zu einer stabilen und akustisch optimierten Belagschale bzw. Fahrbahnbelagelement für einen Rollenprüfstand führen.

Die Belagsschicht kann ein Draht- oder Textilgewebe umfassen. Die luftdurchlässige Belagsschicht kann durch ein solches Draht- oder Textilgewebe auf einfache Weise bereitgestellt werden, sodass einerseits die Herstellung vereinfacht wird und andererseits akustisch optimiertes Verhalten erreicht werden kann. Vorteilhaft als Textilgewebe sind insbesondere Aramide als Fasern.

Die Belagsschicht kann eine Sintermetallstruktur umfassen. Eine solche Sintermetallstruktur weist häufig eine Vielzahl von Poren auf, sodass eine Luftdurchlässigkeit gewährleistet werden kann. Bevorzugt ist dabei eine offen porige Struktur.

Die Fahrbahnbelagelemente können eine Krümmung aufweisen derart, dass ein Aufbringen dieser Fahrbahnbelagelemente auf eine zylindrische Rolle des Rollenprüfstands möglich ist. Somit lässt sich auf einfache Weise die luftdurchlässige Belagschale auf den Rollenprüfstand vorsehen.

Das Fahrbahnbelagelement kann ein Grundelement aufweisen auf dem der Fahrbahnbelag aufgebracht ist. Dieser zweischichtige Aufbau ermöglicht es, eine stabile Struktur bereitzustellen, wobei die Belagsschicht luftdurchlässig aufgebaut ist und an der Außenfläche des Fahrbahnbelagelements vorliegt und dieses auf dem Grundelement aufgebracht ist. Das Grundelement verleiht dem Fahrbahnbelagelement dabei die strukturelle Festigkeit. Der Fahrbahnbelag ist somit bevorzugt lediglich als Schicht auf das Grundelement aufgebracht, durch ein Oberflächenbehandlungsverfahren oder durch Aufbringen von feinstmaschigem Textil- oder Metallgewebe welches mit dem Grundelement verklebt oder verschweißt werden kann. Der Fahrbahnbelag kann zudem auf das Grundelement aufgespritzt werden, wobei anschließend die Oberfläche geglättet (oder geschliffen) werden kann. Besonders vorteilhaft ist dabei das Aufbringen über ein Flammspritzverfahren.

Eine Rolle für einen Rollenprüfstand ist derart ausgestaltet, dass an der äußersten Mantelfläche der Rolle eine luftdurchlässige Schicht aufgespritzt bzw. aufgebracht wird, welche dem oben beschriebenen Fahrbahnbelag entspricht. Somit kann eine gesamte Rolle für einen Rollenprüfstand bereitgestellt werden ohne eine Vielzahl von einzelnen Belagschalen zu benötigen.

Das Grundelement kann zumindest teilweise aus faserverstärkten Kunststoffen aufgebaut sein. Besonders bevorzugt ist das Grundelement aus kohlefaserverstärktem Kunststoff (CFK) aufgebaut. Dies ermöglicht es, besonders leichte Belagschalen auszubilden, wodurch der Kontakt mit dem Reifen verbessert wird, da der Schlupf reduziert werden kann und somit auch akustische Vorteile erreicht werden können. Die Belagschalen können auch aus glasfaserverstärkten Kunststoffen bestehen. Insbesondere kann jedoch das Grundelement aus glasfaserverstärkten Kunststoffen bestehen auf welches der Fahrbahnbelag durch einen Klebevorgang aufgebracht wird.

Die Außenfläche der Belagsschicht kann eine geschliffene Oberfläche sein. Eine solche geschliffene Oberfläche ermöglicht es, den erzeugten Schall beim Abrollvorgang des Fahrzeugreifens weiter zu reduzieren, wobei im Zusammenwirken mit der Luftdurchlässigkeit der Belagsschicht zudem der Vakuumeffekt stark reduziert wird und somit ein äußerst lärmreduziertes Verhalten erreicht werden kann. Vorteilhaft kann die Oberfläche der Außenfläche auch fein geschliffen sein.

Die Außenfläche der Belagsschicht liegt frei, sodass diese Außenfläche direkt mit dem Reifen eines Prüffahrzeugs kontaktiert wird.

Die Außenfläche der Belagsschicht kann derart geschliffen sein, dass die Außenfläche einen Mittenrauwert von maximal 1,6 µm aufweist. Bevorzugt ist der Mittenrauwert der Außenfläche der Belagsschicht ≤ 1 µm. Durch eine solche glatte Oberfläche im Zusammenwirken mit der luftdurchlässigen Belagsschicht ist es möglich, die Abrollgeräusche weiter zu reduzieren.

Die Belagsschicht kann eine Außenfläche aufweisen, welche mit einem Fahrzeugreifen kontaktierbar ist, wobei die Außenfläche eine konkave Oberflächenstruktur aufweist, welche kugelförmige und/oder halbinselförmige Löcher (bevorzugt auch Krater) umfasst. Die Löcher haben dabei vorzugsweise einen Durchmesser < 5 mm und eine einspringende Tiefe von bis zu 10 mm. Die kugelförmigen und/oder linsenförmigen Löcher sind dabei bevorzugt regelmäßig über die Oberfläche der Belagsschicht hinweg verteilt, sodass eine gleichmäßige Lärmminderung erzielt werden kann. Eine besonders vorteilhafte Lärmminderung ist erreichbar, wenn die Löcher/Poren in der Belagsschicht in Abrollrichtung des Fahrbahnbelagelements zueinander versetzt angeordnet sind. Dadurch wird ein besonders gleichmäßiger Minderungseffekt über die gesamte Oberfläche des Fahrbahnbelags erreicht. Die Abrollrichtung ist dabei jene Richtung entlang welcher ein Fahrzeugreifen auf der an der Rolle montierten Belagsschale abrollen würde. Die Abrollrichtung ist insbesondere quer zur Rollenlängsachse bzw. orthogonal zur Längsachse der Rolle/Drehachse der Rolle.

Zur weiteren Reduktion der Abrollgeräusche kann der Fahrbahnbelag in der Belagsschicht elastische und/oder plastische Granulate aufweisen. Diese Granulate sorgen für einen leisen Reifenlauf durch gute Abfederung. Das Granulat kann zudem derart in der Belagsschicht vorgesehen sein, dass das Granulat aus der Außenfläche der Belagsschicht hervorragt, sodass dem Reifen eine weiche Lauffläche angeboten wird. Die Körnung des elastischen und/oder plastischen Granulats liegt bevorzugt zwischen 1 und 16 mm. Die Streumenge des elastischen und/oder plastischen Granulats liegt bevorzugt zwischen 1 bis 6 kg pro kg/m2.

Die Belagsschicht kann Poren aufweisen, welche Hohlräume ausbilden, die ein Luftpolster bereitstellen und dadurch die Lärmentwicklung zwischen Abrollfläche und Reifen deutlich reduzieren. Bevorzugt haben die Poren einen durchschnittlichen Durchmesser ≤ 12 mm und besonders bevorzugt ≤ 400 µm.

Die Belagsschicht weist eine Außenfläche auf, welche nicht luftdicht ist.

Dadurch dass die Belagsschicht eine Außenfläche aufweist, die nicht luftdicht ist, ist es möglich, eine luftdurchlässige Belagsschicht bereitzustellen, sodass die Abrollgeräusche reduziert werden können.

Die Belagsschicht kann aus mehreren Schichten aufgebaut sein. Diese Schichten können unter anderem eine Gewebestruktur und insbesondere ein Verbundgewebe aufweisen. Diese Schichten können miteinander verklebt und/oder verschweißt sein.

Der Fahrbahnbelag kann aus selbsttragendem Verbundgewebe bestehen. Die Bereitstellung des selbsttragenden Verbundgewebes ermöglicht es, einen Fahrbahnbelag bereitzustellen, welcher einerseits hohe strukturelle Festigkeit hat und andererseits eine sehr hohe Lärmminderung ermöglicht.

Die Außenfläche der Belagsschicht kann aus einem Filtermaterial bestehen. Besonders vorteilhaft ist ein Filtermaterial mit der Filterfeinheit ≤ 75 µm. Eine ausreichende Lärmreduktion wird jedoch auch bereits bei einer Filterfeinheit ≤ 250 µm erreicht. Als Filtermaterial können beispielsweise Gewebestrukturen aus Metalldrähten verwendet werden, wobei dies zusätzlich den Vorteil hat, dass eine ausreichende strukturelle Festigkeit gewährleistet wird. Die Belagsschicht des Fahrbahnbelags kann ein Filter sein und insbesondere ein Luftfilter. Durch diese Ausgestaltung ist es möglich, eine ausreichende Luftströmung zwischen der Außenfläche und Innenfläche der Belagsschicht zu gewährleisten, sodass die Lärmentwicklung weiter reduziert werden kann.

Die Belagsschicht kann eine Vielzahl von Hohlräumen (bevorzugt offenporig) aufweisen. Die Porosität einer solchen Belagsschicht ist dabei bevorzugt ≤ 37 % und noch mehr bevorzugt ≤ 30 %. Die Porosität ist dabei das Verhältnis der Hohlräume zum Gesamtvolumen der Schicht.

Die Belagsschicht kann derart luftdurchlässig sein, dass bei einer Anströmung der Belagsschicht mit einem Gas mit einer Anströmgeschwindigkeit von 0,333 m/sec (20 Meter pro Minute) ein Druckverlust über die Schicht von 50 - 700 Pa (0,5 - 7 mbar) auftritt. Durch diese besonders vorteilhafte Luftdurchlässigkeit der Belagsschicht des Fahrbahnbelagelements kann beim Einsatz des Fahrbahnbelagelements in einem Rollenprüfstand eine besonders deutliche Lärmreduktion erreicht werden, sodass die Abrollgeräusche besonders stark reduziert werden können. Insbesondere wird durch die genannte Luftdurchlässigkeit der Belagsschicht die Bildung des Vakuums beim Abrollen des Reifens derart reduziert, dass eine deutliche Lärmreduktion von bspw. 3 dB oder mehr erzielt werden kann.

Die Belagsschicht kann aus einer Filterplatte aufgebaut sein. Dabei kann die Filterplatte derart gekrümmt sein, dass diese den Fahrbahnbelag des Fahrbahnbelagelements bildet. Durch diese vorteilhafte Ausgestaltung wird einerseits die Lärmreduktion deutlich verbessert und andererseits eine möglichst einfache Herstellung des Fahrbahnbelagelements ermöglicht.

Das Fahrbahnbelagelement kann eine Belagsschicht mit einer Außenfläche aufweisen, wobei die Belagsschicht ein Gewebe ist und die Maschenweite im Bereich von 15 bis 315 µm liegt und das Gewebe insbesondere ein Quadratmaschengewebe ist.

Vorteilhaft kann die Belagsschicht den gesamten Fahrbahnbelag bilden. Zudem kann die Belagsschicht vorteilhaft ein Metallgewebe sein mit einer Maschenweite von 20 µm bis zu 10 mm, sodass vorteilhafte Ergebnisse bezüglich der Reduktion der Abrollgeräusche erreicht werden können.

Vorteilhafterweise wird eine Belagsschicht bereitgestellt, welche ein Metallgewebe ist, wobei dieses eine Leinenbindung (glatte Bindung) im Wechsel 1:1 aufweist.

Eine Prüfstandrolle für einen Rollenprüfstand kann Fahrbahnbelagelemente gemäß der oben genannten Ausführungsformen aufweisen.
Ein Fahrbahnbelag für einen Rollenprüfstand kann zumindest eine Belagsschicht aufweisen mit einer Außenfläche, wobei die Belagsschicht zumindest teilweise luftdurchlässig ist. Ein solcher vorteilhafter Fahrbahnbelag für einen Rollenprüfstand ermöglicht es, eine Lärmreduktion beim Abrollen des Fahrzeugreifens im Rollenprüfstand zu erreichen, sodass verschiedene Lärmmessungen am Antriebsstrang ohne parasitäre Lärmquellen ermöglicht werden.

### Kurzbeschreibung der Figuren

Fig. 1a zeigt beispielhaft eine Seitenansicht eines Fahrbahnbelagelements.
Fig. 1b zeigt eine weitere Ansicht eines Fahrbahnbelagelements.
Fig. 1c zeigt eine Ansicht auf die Außenfläche des Fahrbahnbelagelements.
Fig. 2 zeigt eine Übersichtsansicht einer Ausführungsform der vorliegenden Erfindung.
Fig. 3 zeigt eine Übersichtsansicht eines Beispiels, welches nicht in den Schutzumfang der Ansprüche fällt.

### Detaillierte Beschreibung der Figuren und bevorzugte Ausführungsformen der vorliegenden Erfindung

Im Folgenden werden Ausführungsbeispiele der vorliegenden Erfindung anhand der beispielhaften Figuren detailliert beschrieben. Die Merkmale der Ausführungsbeispiele sind im Ganzen oder teilweise kombinierbar und die vorliegende Erfindung ist in keiner Weise auf die beschriebenen Ausführungsbeispiele beschränkt. In den Zeichnungen werden gleiche bzw. ähnliche Merkmale mit den gleichen Bezugszeichen gekennzeichnet.

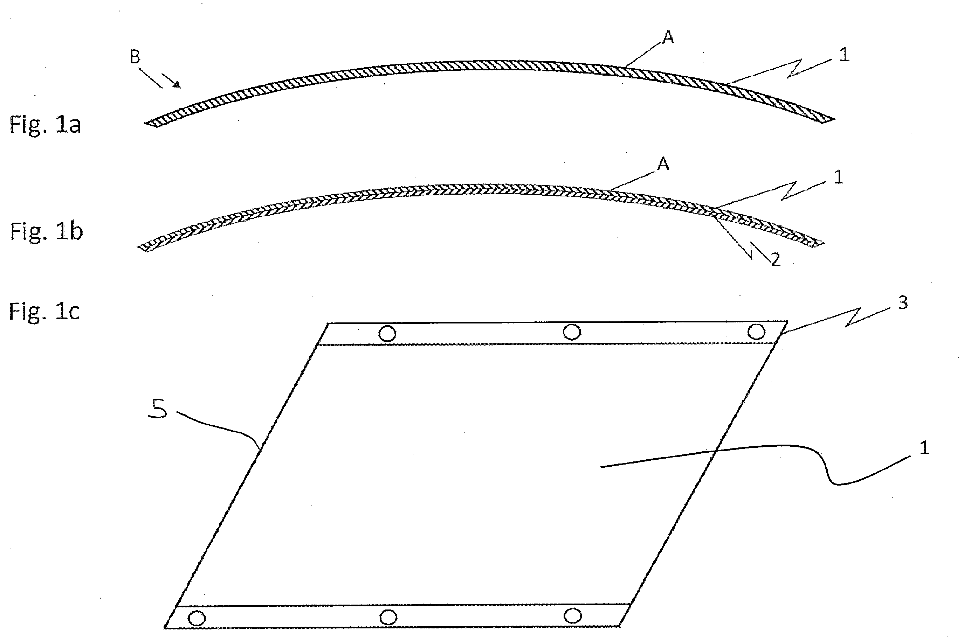

In Fig. 1a ist eine Belagschale B (Fahrbahnbelagelement) dargestellt, welche aus einer Belagsschicht 1 besteht, wobei die komplette Schale aus luftdurchlässigem Material gefertigt ist. Als luftdurchlässiges Material können insbesondere verschiedene Filtermaterialien vorgesehen werden. Bevorzugt sind Metallgewebe oder Metallfiltergewebe vorgesehen, welche eine ausreichende Luftdurchlässigkeit der Belagschale B garantieren. Zur Bestimmung der Luftdurchlässigkeit kann die Belagschale B mit einem Gas mit einer Anströmgeschwindigkeit von 20 Metern pro Minute angeströmt werden, wobei der dadurch erzielte Druckverlust im Bereich von 0,5 bis 7 mB liegt, damit die vorteilhafte Luftdurchlässigkeit erreicht werden kann. Dies ist jedoch auch abhängig von der Materialwahl, sodass auch entsprechend andere Druckverluste möglich sind. Das Fahrbahnbelagelement in Fig. 1a ist somit aus einem luftdurchlässigen Material aufgebaut, welches aus einer Belagsschicht 1 besteht, die eine oder mehrere Schichten aufweisen kann, wobei die Außenfläche A, die Fläche, welche mit dem Fahrzeugreifen kontaktierbar ist, auch Poren aufweisen kann. Die Belagschale B weist eine glatte Oberfläche auf, welche jedoch nicht luftdicht ist. Durch die glatte Oberfläche ergibt sich ein sehr kleiner Windmitnahmeeffekt, wobei durch die Luftdurchlässigkeit des Materials das "Schmatzen" beim Abrollen eines Fahrzeugreifens verhindert wird. Die luftdurchlässige Oberfläche kann ein Draht- oder Textilgewebe sein, wobei auch eine Sintermetallstruktur vorgesehen werden kann und die Außenfläche A glatt geschliffen werden kann.

Die Belagsschicht 1 des Fahrbahnbelagelements bildet den Fahrbahnbelag.

Diese Belagsschicht 1 kann ein Textil- oder Metallgewebe sein bzw. ein Material, das eine Vielzahl von Poren aufweist. Das dafür verwendete Filtermaterial weist somit eine Filterfeinheit, auch Porengröße genannt, auf. Die geometrische Porengröße beschreibt den Durchmesser der größten sphärischen Kugel, die das Gewebe gerade noch passieren kann. Sie wird auf Basis charakteristischer Gewebeparameter, wie Bindungsart, Drahtdurchmesser und Teilung berechnet. Die geometrische Porengröße ist ein konkreter Hinweis auf die Abscheidung von Partikeln durch den Siebeffekt. Als Maschenweite ist vorliegend der projizierte Abstand zwischen zwei benachbarten Ketten oder Schussdrähten in der projizierten Gewebeebene zu verstehen.

In Fig. 1b ist ein Fahrbahnbelagelement dargestellt, welches die Belagsschicht 1 aufweist, welche auf ein Grundelement 2 aufgebracht ist. Bevorzugt ist dieses Grundelement 2 eine aus faserverstärkten Kunststoffen und insbesondere glasfaserverstärkten Kunststoffen oder kohlefaserverstärkten Kunststoffen aufgebaut. Durch diese Ausgestaltung ist es möglich, ein optimiertes Fahrbahnbelagelement bereitzustellen, welches eine optimierte Belagsschicht 1 aufweist, wobei die strukturelle Festigkeit über das Grundelement 2 gewährleistet wird.

In Fig. 1c ist eine Draufsicht auf das Fahrbahnbelagelement mit der Belagsschicht 1 dargestellt. Die Belagsschicht 1 ist dabei luftdurchlässig aufgebaut. Wie in Fig. 1c ersichtlich, weist das Fahrbahnbelagelement auch zwei Befestigungsabschnitte 3 zum Befestigen des Fahrbahnbelagelements an der Rolle 4 eines Rollenprüfstands auf. Über die vorgesehenen Bohrungen kann das Belagelement auf die Rolle 4 eines Rollenprüfstands aufgebracht und fixiert werden.

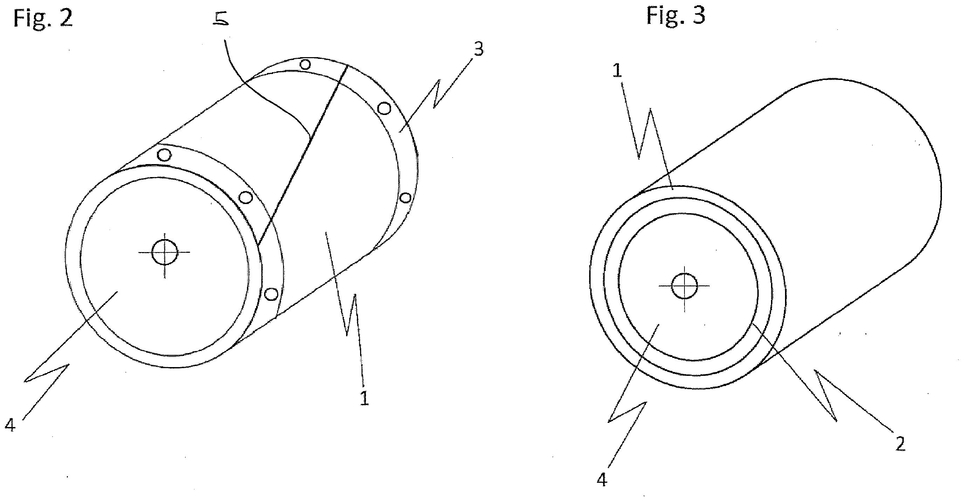

In Fig. 2 ist eine Ausführungsform der Rolle 4 eines Rollenprüfstands dargestellt, wobei auf diese Rolle 4 mehrere Fahrbahnbelagelemente aufgebracht wurden. Auf die Rolle 4 des Rollenprüfstands werden mehrere Belagschalen B (Fahrbahnbelagelemente) aufgebracht und darauf fixiert. Die Belagsschicht 1 ist dabei derart angeordnet, dass diese mit dem Reifen eines auf dem Rollenprüfstand vorzusehenden Fahrzeugs kontaktierbar ist. Die Befestigungsabschnitte 3 weisen bevorzugt Bohrungen auf durch welche entsprechende Verschraubungen geführt werden können, um die Belagschalen B an der Rolle 4 zu fixieren. Die Fahrbahnbelagelemente B bzw. die Belagschicht 1 sind bspw. über einen Schrägstoß 5 miteinander kontaktierbar. Durch den Schrägstoß 5 ist es möglich, ein reduziertes Lärmverhalten beim Abrollen des Fahrzeugreifens über die Prüfstandsrolle zu erreichen.

In Fig. 3 ist eine Beispiel einer Rolle eines Rollenprüstands mit einem Fahrbahnbelagelement dargestellt, welches nicht in den Schutzumfang der Ansprüche fällt. Der Fahrbahnbelag weist eine zusammenhängende Belagsschicht 1 mit einer Außenfläche auf, wobei die Belagsschicht 1 zumindest teilweise luftdurchlässig aufgebaut ist und wobei jedoch bevorzugt die gesamte Belagsschicht 1 von Gas durchströmbar aufgebaut ist.

Die Belagsschicht 1 kann derart luftdurchlässig aufgebaut sein, dass sie von einem Gas durchströmbar ist und zwar von der Innenfläche zur Außenfläche der Belagsschicht 1.

Der Fahrbahnbelag ist in Fig. 3 direkt auf die gesamte Rolle 4 des Rollenprüfstands aufgebracht, sodass einzelne Fahrbahnbelagelemente nicht nötig sind. Der Fahrbahnbelag kann dabei bevorzugt auf die Rolle 4 aufgespritzt sein, beispielsweise durch Flammspritzen. Die Oberfläche kann anschließend geglättet/geschliffen werden zur weiteren Verbesserung des akustischen Verhaltens. Zwischen der Belagsschicht 1 und der Rolle 4 kann zudem optional ein Grundelement 2 vorgesehen sein.

Vorliegende Merkmale, Komponenten und spezifische Details können ausgetauscht und/oder kombiniert werden, um weitere Ausführungsformen zu erstellen, in Abhängigkeit des geforderten Verwendungszwecks. Etwaige Modifikationen, die im Bereich des Wissens des Fachmanns liegen, werden mit der vorliegenden Beschreibung implizit offenbart.

## Patentansprüche

1. Fahrbahnbelagelement für einen Rollenprüfstand mit
- einem Fahrbahnbelag und
- zumindest zwei Befestigungsabschnitten (3) zum Befestigen und Fixieren des Fahrbahnbelagelements (B) an dem Aussenumfang einer Rolle (4) des Rollenprüfstands,
wobei der Fahrbahnbelag eine Belagsschicht (1) mit einer Prüfstandsrollen-Außenfläche (A) aufweist, die Belagsschicht (1) zumindest teilweise luftdurchlässig aufgebaut ist und die Prüfstandsrollen-Außenfläche (A) einen Kontaktbereich beim Abrollen zu einem Reifen bildet.

2. Fahrbahnbelagelement nach Anspruch 1, wobei die Belagsschicht (1) derart luftdurchlässig ist, dass eine Luftströmung durch die Außenfläche (A) möglich ist.

3. Fahrbahnbelagelement nach einem der vorangegangenen Ansprüche, wobei die Belagsschicht (1) von Gas durchströmbar aufgebaut ist.

4. Fahrbahnbelagelement nach einem der vorangegangenen Ansprüche, wobei die Belagsschicht (1) aus einem Filtermaterial zur Realisierung eines luftdurchlässigen Fahrbahnbelags besteht.

5. Fahrbahnbelagelement nach einem der vorangegangenen Ansprüche, wobei die Belagsschicht (1) eine Metallstruktur aufweist.

6. Fahrbahnbelagelement nach einem der vorangegangenen Ansprüche, wobei die Belagsschicht (1) ein Draht- oder Textilgewebe aufweist.

7. Fahrbahnbelagelement nach einem der vorangegangenen Ansprüche, wobei die Belagsschicht (1) eine Sintermetalstruktur aufweist.

8. Fahrbahnbelagelement nach einem der vorangegangenen Ansprüche, wobei das Fahrbahnbelagelement ein Grundelement (2) aufweist und der Fahrbahnbelag auf dem Grundelement (2) aufgebracht ist.

9. Fahrbahnbelagelement nach Anspruch 8, wobei das Grundelement (2) zumindest teilweise aus faserverstärkten Kunststoff aufgebaut ist.

10. Fahrbahnbelagelement nach einem der vorangegangenen Ansprüche, wobei die Außenfläche (A) eine geschliffene Oberfläche ist, und wobei die Außenfläche (A) der Belagsschicht (1) insbesondere derart geschliffen ist, dass die Außenfläche (A) einen Mittenrauwert von maximal 1,6 µm aufweist.

11. Fahrbahnbelagelement nach einem der vorangegangenen Ansprüche, wobei die Belagsschicht (1) Poren aufweist und die Poren insbesondere einen durchschnittlichen Durchmesser kleiner 10µm aufweisen.

12. Fahrbahnbelagelement nach einem der vorangegangenen Ansprüche, wobei die Belagsschicht (1) aus mehreren Schichten aufgebaut ist mit einer Gewebestruktur, und insbesondere einem Verbundgewebe und wobei zumindest eine Schicht luftdurchlässig ist.

13. Fahrbahnbelagelement nach einem der vorangegangenen Ansprüche, wobei der Fahrbahnbelag aus selbsttragenden Verbundgewebe besteht.

14. Fahrbahnbelagelement nach einem der vorangegangenen Ansprüche, wobei die Belagsschicht (1) ein Metalldrahtgewebe ist, und wobei das Metalldrahtgewebe insbesondere Schichten aufweist die miteinander verschweißt sind.

15. Fahrbahnbelagelement nach einem der vorangegangenen Ansprüche, wobei die Belagsschicht (1) luftdurchlässig ist, und bei einer Anströmung der Belagschicht mit einem Gas mit einer Anströmgeschwindigkeit von 20m/min ein Druckverlust von 0,5 bis 7 mBar auftritt.

16. Fahrbahnbelagelement nach einem der vorangegangenen Ansprüche, wobei die die Außenfläche (A) der Belagschicht (1) ein Gewebe ist und die Maschenweite im Bereich von 15 bis 350 µm liegt und das Gewebe insbesondere ein Quadratmaschengewebe ist.

17. Prüfstandsrolle für einen Rollenprüfstand, wobei die Prüfstandsrolle im Umfangsbereich Fahrbahnbelagelemente (B) gemäß zumindest einen der vorhergehenden Ansprüche aufweist, welche über Schrägstöße miteinander kontaktierbar sind und im Abrollbereich der Prüfstandsrolle (4) anordenbar sind.

## Claims

1. A pavement surface element for a roller test bench, comprising
- a pavement surface, and
- at least two fastening portions (3) for fastening and fixing said pavement surface element (B) to the outer periphery of a roller (4) of said roller test bench,
wherein said pavement surface includes a pavement layer (1) having a test bench roller outer surface (A),
said pavement layer (1) is configured to be at least partly permeable to air, and
said test bench roller outer surface (A) forms an area of contact with a tire while rolling.

2. The pavement surface element according to claim 1, wherein said pavement layer (1) is permeable to air in such a way that an air flow through said outer surface (A) is possible.

3. The pavement surface element according to one of the preceding claims, wherein said pavement layer (1) is configured such that gas can flow through it.

4. The pavement surface element according to one of the preceding claims, wherein said pavement layer (1) consists of a filter material for implementing a pavement surface permeable to air.

5. The pavement surface element according to one of the preceding claims, wherein said pavement layer (1) has a metal structure.

6. The pavement surface element according to one of the preceding claims, wherein said pavement layer (1) comprises a wire or textile fabric.

7. The pavement surface element according to one of the preceding claims, wherein said pavement layer (1) has a sintered metal structure.

8. The pavement surface element according to one of the preceding claims, wherein said pavement surface element comprises a base element (2) and said pavement surface is applied to said base element (2).

9. The pavement surface element according to claim 8, wherein said base element (2) is at least partially made up of fiber-reinforced plastic.

10. The pavement surface element according to one of the preceding claims, wherein said outer surface (A) is a ground surface, and wherein said outer surface (A) of said pavement layer (1) is, in particular, ground such that said outer surface (A) has a mean roughness index of 1.6 µm,

11. The pavement surface element according to one of the preceding claims, wherein said pavement layer (1) has pores and, in particular, said pores have an average diameter of less than 10 µm.

12. The pavement surface element according to one of the preceding claims, wherein said pavement layer (1) is made up of a plurality of layers having a fabric structure, and in particular a composite fabric, and wherein at least one layer is permeable to air.

13. The pavement surface element according to one of the preceding claims, wherein said pavement surface consists of a self-supporting composite fabric.

14. The pavement surface element according to one of the preceding claims, wherein said pavement layer (1) is a metal wire fabric, and wherein, in particular, said metal wire fabric comprises layers which are welded together.

15. The pavement surface element according to one of the preceding claims, wherein said pavement layer (1) is permeable to air, an wherein a pressure loss of 0.5 to 7 mbar occurs when a gas flows against said pavement layer with a flow velocity of 20 m/min.

16. The pavement surface element according to one of the preceding claims, wherein said outer surface (A) of said pavement layer (1) is a fabric, the mesh size is in the range of 15 to 350 µm, and, in particular, the fabric is a square mesh fabric.

17. A test bench roller for a roller test bench, wherein said test bench roller, in the peripheral region, comprises pavement surface elements (B) according to at least one of the preceding claims, said pavement surface elements (B) being able to contact each other via oblique joints and to be arranged in the treading region of said test bed roller (4).

## Revendications

1. Élément de revêtement de chaussée pour un banc d'essai à rouleaux, comportant
- un revêtement de chaussée et
- au moins deux parties de fixation (3) pour attacher et fixer l'élément de revêtement de chaussée (B) à la périphérie extérieure d'un rouleau (4) du banc d'essai à rouleaux,
dans lequel
le revêtement de chaussée comprend une couche de revêtement (1) ayant une surface extérieure de rouleau de banc d'essai (A),
la couche de revêtement (1) est au moins partiellement perméable à l'air et la surface extérieure de rouleau de banc d'essai (A) forme une zone de contact avec un pneumatique lors d'un roulement.

2. Élément de revêtement de chaussée selon la revendication 1,
dans lequel
la couche de revêtement (1) est perméable à l'air de manière à permettre une circulation d'air à travers la surface extérieure (A).

3. Élément de revêtement de chaussée selon l'une des revendications précédentes,
dans lequel
la couche de revêtement (1) est conçue de manière à pouvoir être traversée par un gaz.

4. Élément de revêtement de chaussée selon l'une des revendications précédentes,
dans lequel
la couche de revêtement (1) est constituée en un matériau de filtrage pour réaliser un revêtement de chaussée perméable à l'air.

5. Élément de revêtement de chaussée selon l'une des revendications précédentes,
dans lequel
la couche de revêtement (1) présente une structure métallique.

6. Élément de revêtement de chaussée selon l'une des revendications précédentes,
dans lequel
la couche de revêtement (1) présente un tissu en fil ou en textile.

7. Élément de revêtement de chaussée selon l'une des revendications précédentes,
dans lequel
la couche de revêtement (1) présente une structure métallique frittée.

8. Élément de revêtement de chaussée selon l'une des revendications précédentes,
dans lequel
l'élément de revêtement de chaussée présente un élément de base (2), et le revêtement de chaussée est déposé sur l'élément de base (2).

9. Élément de revêtement de chaussée selon la revendication 8,
dans lequel
l'élément de base (2) est conçu au moins partiellement en matière plastique renforcée de fibres.

10. Élément de revêtement de chaussée selon l'une des revendications précédentes,
dans lequel
la surface extérieure (A) est une surface meulée, la surface extérieure (A) de la couche de revêtement (1) étant en particulier meulée de telle sorte que la surface extérieure (A) présente une rugosité moyenne maximale de 1,6 µm.

11. Élément de revêtement de chaussée selon l'une des revendications précédentes,
dans lequel
la couche de revêtement (1) présente des pores et les pores présentent en particulier un diamètre moyen inférieur à 10 µm.

12. Élément de revêtement de chaussée selon l'une des revendications précédentes,
dans lequel
la couche de revêtement (1) est conçue en plusieurs couches avec une structure de tissu, en particulier avec un tissu composite, dont au moins une couche est perméable à l'air.

13. Élément de revêtement de chaussée selon l'une des revendications précédentes,
dans lequel
le revêtement de chaussée est constituée d'un tissu composite autoportant.

14. Élément de revêtement de chaussée selon l'une des revendications précédentes,
dans lequel
la couche de revêtement (1) est un tissu en fil métallique, le tissu en fil métallique présentant en particulier des couches qui sont soudées entre elles.

15. Élément de revêtement de chaussée selon l'une des revendications précédentes,
dans lequel
la couche de revêtement (1) est perméable à l'air, et lorsque la couche de revêtement (1) est exposée à un écoulement de gaz dont la vitesse d'écoulement est de 20 m/min, il se produit une perte de pression de 0,5 à 7 mBar.

16. Élément de revêtement de chaussée selon l'une des revendications précédentes,
dans lequel
la surface extérieure (A) de la couche de revêtement (1) est un tissu dont le maillage est de l'ordre de 15 à 350 µm, et le tissu est en particulier un tissu à maillage carré.

17. Rouleau de banc d'essai pour un banc d'essai à rouleaux, le rouleau de banc d'essai comprenant dans la zone périphérique des éléments de revêtement de chaussée (B) selon l'une au moins des revendications précédentes, qui peuvent être mis en contact les uns avec les autres par des joints obliques et peuvent être disposés dans la zone de roulement du rouleau de banc d'essai (4).
